Europäisches Patentamt

European Patent Office

Office européen des brevets

(19)

(11) Publication number: **0 134 858**
**B1**

# EUROPEAN PATENT SPECIFICATION

(12)

(45) Date of publication of patent specification: **17.09.86**

(21) Application number: **83305542.9**

(22) Date of filing: **20.09.83**

(51) Int. Cl.[4]: **C 01 B 3/36, C 10 J 3/46, C 10 J 3/48**

(54) Production of synthesis gas from heavy hydrocarbon fuels containing high metal concentrations.

(43) Date of publication of application:
**27.03.85 Bulletin 85/13**

(45) Publication of the grant of the patent:
**17.09.86 Bulletin 86/38**

(84) Designated Contracting States:
**DE FR GB IT NL SE**

(56) References cited:
**EP-A-0 005 138
DE-B-2 065 892
FR-A-2 420 568
GB-A-2 053 262
US-A-3 620 700
US-A-3 951 617
US-A-3 998 609**

(73) Proprietor: **TEXACO DEVELOPMENT CORPORATION
2000 Westchester Avenue
White Plains New York 10650 (US)**

(72) Inventor: **Marion, Charles Parker
655 Shore Acres Drive
Mamaroneck New York 10543 (US)**
Inventor: **Jahnke, Frederick Charles
2 Winthrop Street
Rye New York 10580 (US)**

(74) Representative: **Ben-Nathan, Laurence Albert et al
c/o MICHAEL BURNSIDE & PARTNERS 2
Serjeants' Inn Fleet Street
London EC4Y 1HL (GB)**

EP 0 134 858 B1

Courier Press, Leamington Spa, England.

## Description

This invention relates to the partial oxidation of a liquid hydrocarbon fuel to produce synthesis gas. More specifically, it relates to a process for simultaneously producing two clean product streams of synthesis gas, one gas stream with a high and the other gas stream with a low, $H_2O$/dry gas mole ratio by the partial oxidation of heavy hydrocarbon feedstocks containing high metal concentrations.

When a heavy liquid hydrocarbon fuel containing high metal concentrations such as vacuum resid is reacted by partial oxidation, entrained in the hot, raw gas stream is particulate carbon and ash, i.e., nickel, vanadium, and iron compounds. After the raw gas stream is cleaned free from particulate matter, it is economically desirable to dispose of the particulate carbon in the gas generator. However, recent commercial experience in gasifying heavy feed stocks containing high metal concentrations with 100% soot recycle has shown that the convection type gas coolers in the system may be then subject to shutdown because of fouling. Deposits may plug the gas cooler tube inlets or may collect downstream in the low-temperature sections of the gas cooler tubes. These problems and others are now avoided by the subject invention.

The hot raw effluent gas stream from the reaction zone of a partial oxidation gas generator may comprise principally $H_2$, CO, $CO_2$, and $H_2O$ together with other gaseous constituents, and minor amounts of entrained particulate matter, i.e., particulate carbon and ash. The hot, raw effluent gas must be cooled and cleaned to produce synthesis gas or fuel gas. Synthesis gas is important commercially as a source of feed gas for the synthesis of hydrocarbons or oxygen containing organic compounds, or for producing hydrogen or ammonia.

Entrained particulate carbon and ash may be removed from the raw effluent gas by quenching and scrubbing with water such as described in coassigned US—A—3232728. Cleaning the effluent gas by scrubbing with an oil-carbon slurry is described in coassigned US—A—3639261. Recovery of the soot, from carbon-water dispersions in a carbon-recovery facility is described in coassigned US—A—2999741; 2992906; 3044179; and 4134740. Typical decanting procedures are described in coassigned US—A—3980592 and 4014786. These coassigned U.S. patents are incorporated herein by reference.

In accordance with the invention, the feedstock to a partial oxidation process for the simultaneous continuous production of two streams of cleaned synthesis gas having high and low $H_2O$/dry gas mole ratios respectively may comprise a heavy hydrocarbon fuel containing high metal concentrations as well as all of the soot rich in metal valves recovered in the process.

Two free-flow noncatalytic refractory lined partial oxidation gas generators are used. All of the hot raw synthesis gas produced in the first gas generator is quench cooled in water in a quench tank; and, simultaneously, all of the hot raw synthesis gas produced in the second gas generator is split into two separate hot, raw gas streams. One of said split gas streams is quench cooled in water in a quench tank. Simultaneously, the other split gas stream is cooled in a convection-type gas cooler by indirect heat exchange with boiler feed water, without the tubes in the gas cooler plugging or fouling. The two quench cooled gas streams are combined and scrubbed free from particulate matter, i.e., particulate carbon and ash with water to produce a clean product stream of synthesis gas having a high $H_2O$/dry gas mole ratio. Simultaneously, the stream of synthesis gas leaving the gas cooler is separately scrubbed free from particulate matter to produce a clean product stream of synthesis gas having a low $H_2O$/dry gas mole ratio. The streams of carbon-water-ash dispersion from all of the quench tanks and gas scrubbers is processed in a soot-recovery facility to separate clarified water, ash, and to produce a liquid dispersion of soot in water or in a liquid hydrocarbon carrier. All of this dispersion is then introduced into the first gas generator as a portion of the liquid hydrocarbon fuel feed. Fouling and plugging of the tubes of a convection-type gas cooler associated with the second gas generator is prevented even though there is total carbon recycle in the process by: (1) lowering the fraction of ash in the gas stream going to the gas cooler due to split flow, and (2) decreasing the total metals in the feed to the second gas generator by eliminating the metals normally recycled in the soot recycle.

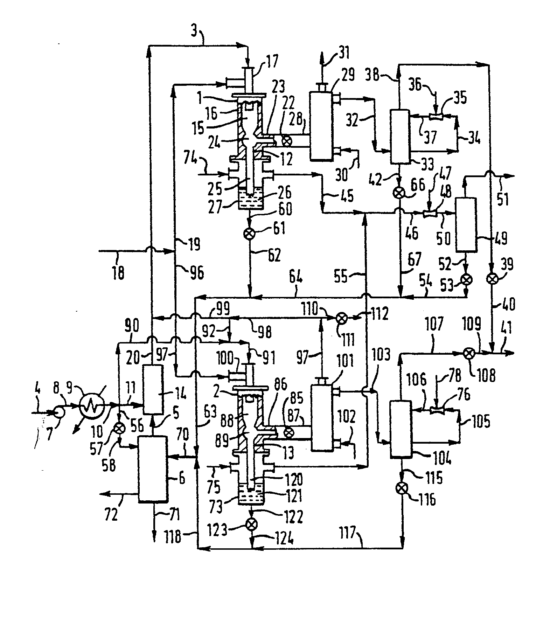

The invention will be further understood by reference to the accompanying drawing. The drawing is a schematic representation of a preferred embodiment of the process.

A more complete understanding of the invention may be had by reference to the accompanying drawing which illustrates one embodiment of the invention in which conventional partial oxidation gas generators 1 and 2 are simultaneously and continuously operated.

Synthesis gas generator 1 is fed with a fuel mixture from line 3 which comprises heavy liquid hydrocarbon fuel containing high concentrations of metal compounds from line 4 and a liquid dispersion of soot containing metals in a liquid carrier from line 5 by way of a conventional soot recovery facility 6 as previously described. Actually, the heavy liquid hydrocarbon fuel in line 4 is pumped by means of pump 7 through line 8, heater 9 (optional), and lines 10 and 11 into mixer 14 where it is mixed with the liquid dispersion of soot from line 5. Part of the hydrocarbon fuel feedstock in line 10 is preferably sent to soot-recovery facility 6 by way of line 56, valve 57, and line 58 to provide the bulk of the liquid carrier for the soot in line 5. The fuel mixture in line 20 is mixed in line 3 with a temperature moderator such as steam from line 99.

The mixture of fuel and steam in line 3 is introduced into the free-flow noncatalytic reaction zone 15, lined with thermal insulating refractory 16, of gas generator 1 by way of one passage in burner 17 located in the top of gas generator 1. At the same time, a stream of free-oxygen containing gas from line 18 is passed through line 19 and is introduced into reaction zone 15 of gas generator 1 by way of another passage in burner 17. The autogenous partial oxidation of the fuel mixture then takes place in the reaction zone of gas generator 1 to produce a hot, raw synthesis gas stream containing unreacted entrained particulate carbon and ash. During normal operation, all of the hot raw synthesis gas stream is quench cooled and scrubbed with water in a quench tank located below the reaction zone. Thus, in the preferred embodiment, with flow control means 22 closed in refractory lined transfer line 23, or alternatively flow control means valve 39 closed, all of the raw synthesis gas leaving reaction zone 15 is passed down through thermal refractory lined gas diversion chamber 24, refractory lines passage 12, dip-tube 25 and into quench water 26 contained in the bottom of a conventional-type quench tank 27 located below reaction zone 15. Flow control means 22 is a blank flange plate or valve located in the line upstream or downstream from gas cooler 29 for controlling the flow rate, or starting or stopping the passage of the split, hot, raw synthesis gas stream therethrough.

The partially cleaned quench cooled stream of synthesis gas with most of the particulate carbon and ash removed leaves quench tank 27 by way of line 45 and is mixed with a second stream of partially cleaned quench cooled stream of synthesis gas from line 55, to be further described. The mixture of gases is passed through line 46, and into venturi scrubber 48 where it is scrubbed free of any remaining entrained particulate carbon and ash with water from line 47. The mixture of synthesis gas and liquid dispersion comprising particulate carbon, water, and ash enters gas scrubbing and separation column 49 through line 50. A clean product stream of synthesis gas having a high $H_2O$/dry gas mole ratio in the range of about 1.0 to 2.0, such as 1.5 leaves by way of line 51 at the top of separator 49, and the liquid dispersion comprising particulate carbon, water and ash leaves through bottom line 52, valve 53 and line 54.

The liquid dispersion comprising particulate carbon, water, and ash in the bottom of quench tank 27 is passed through line 60, valve 61, line 62 and into line 63 where it is mixed with the dispersion comprising particulate carbon, water, and ash from lines 54 and 64 from separator 49.

During normal operation about 45 to 55 volume percent, such as 50 vol.% of the plant-design total synthesis gas output is produced by gas generator 1.

Simultaneously with the operation of gas generator 1, gas generator 2 is also being operated to produce the remainder of the plant-design total synthesis gas output. Preferably, synthesis gas generators 1 and 2 are substantially of the same size and produce gas at the same rate. Flow control means 85 in refractory lined line 86—87 is open, or alternatively flow control means such as valve 108 is open, and the hot raw synthesis gas produced in refractory lined reaction zone 88 of gas generator 2 is split into two gas streams in thermal refractory lined gas-diversion chamber 89. Flow control means 85 is a blank flange plate or valve located in the line upstream or downstream from gas cooler 101 for controlling the flow rate, or starting or stopping the passage of the split hot raw synthesis gas stream therethrough. Heavy hydrocarbon fuel feedstock containing high concentrations of metal compounds from line 4, pump 7, line 8, optional heater 9, lines 10 and 90 is mixed in line 91 with a temperature moderator such as steam from line 92. The mixture of fuel and steam is introduced into the reaction zone of gas generator 2 by way of one passage in burner 100. In contrast with the reactant fuel fed to gas generator 1, there is no soot dispersion containing metals from line 5 mixed with the reactant fuel feed to gas generator 2. A stream of free-oxygen containing gas from line 18 is passed through line 96 and is introduced into reaction zone 88 of gas generator 2 by way of burner 100.

As previously mentioned, during normal operation the raw effluent synthesis gas stream from reaction zone 88 in gas generator 2 is split into two hot, raw synthesis gas streams. The two split, raw synthesis gas streams may be produced at the same gas rate. For example, the first split, hot raw synthesis gas stream may comprise about 10 to 40 vol.%, say 25 vol.% of the plant-design total synthesis gas output and may be passed through refractory lines 86—87, flow control means 85, and conventional convection-type gas cooler 101 where it passes in indirect heat exchange with boiler feed water (BFW). The BFW enters through line 102 and leaves as saturated or superheated steam through through lines 97—98. This steam is employed as the temperature moderator in one or both gas generators. Alternatively, a portion of steam may be removed for use elsewhere in the system through line 110, valve 111 and line 112.

The partially cooled synthesis gas leaves gas cooler 101 through line 103 and is cleaned in gas scrubbing and separation column 104. The gas stream leaves by line 105 and is scrubbed free from entrained particulate carbon and ash in venturi scrubber 76 with water from line 78. The mixture of synthesis gas and water passes through line 106 into column 104.

A stream of liquid dispersion of particulate carbon, water, and ash leaves gas scrubber and separator 104 through line 115, valve 116, line 117, and is mixed in line 118 with the stream of liquid dispersion of particulate carbon, water, and ash from line 124 to be described further. Further mixing takes place in line 70 with the stream of liquid dispersion of particulate carbon, water, and ash from line 63. Conventional lock hoppers (not shown) may be used to remove the liquid dispersion of particulate carbon, water, and ash from the bottoms of quench tanks 27 and 73 and gas scrubbing and separation columns 33, 49, and 104.

The stream of liquid dispersion of particulate carbon, water, and ash in line 70 is processed in soot-recovery facility 6.

Soot-recovery facility 6 may be any suitable conventional mode for separating clarified water and a portion of the ash from the liquid dispersion of particulate carbon, water, and ash to produce the liquid dispersion of soot in line 5. The clarified water stream leaves through line 72 and a portion may be recycled to quench tanks 27 and 73 by way of lines 74 and/or 75 respectively. Another portion of the clarified water may be recycled to venturi scrubbers 35, 48 and 76 by way of lines 36, 47 and 78, respectively. The stream of liquid dispersion of soot in a liquid carrier from the group liquid hydrocarbon fuel, water, and mixtures thereof is passed through line 5 into mixer 14, previously described. Soot comprises particulate carbon containing high metal values. The remainder of the metals and metal compounds leave the system through line 71 as the ash stream.

A clean product stream of synthesis gas having a low $H_2O$/dry gas mole ratio in the range of about 0.05 to 0.5, such as about 0.1 leaves column 104 through overhead line 107, valve 108, and lines 109 and 41.

The second split, hot raw synthesis gas stream may comprise the remainder of the hot, raw synthesis gas produced in reaction zone 88 of synthesis gas generator 2. For example, the second split, hot, raw, synthesis gas stream may comprise about 10 to 40 vol.%, say 25 vol.% of the plant-design total synthesis gas output. The term 'plant-design total synthesis gas output' is the total volume of product gas that the system is designed to produce, including both streams of synthesis gas with high and low $H_2O$/dry gas mole ratios, respectively.

The first and second split streams of hot, raw synthesis gas are simultaneously processed. The second split stream of hot, raw synthesis gas is passed through chamber 89, refractory lined passage 13, dip-leg 120 into water 121 contained in the bottom of a conventional-type quench tank 73 located below reaction zone 88. The entrained particulate carbon and ash are removed from the gas stream by the turbulent scrubbing action of the quench water. The two streams of quench cooled and scrubbed synthesis gas from lines 55 and 45 are mixed together in line 46 and further cleaned in the manner previously discussed to produce the clean product stream of synthesis gas with a high $H_2O$/dry gas mole ratio in line 51. A liquid dispersion comprising particulate carbon, water, and ash in the bottom of quench tank 73 is removed through line 122, valve 123, line 124, and is mixed in line 118 with the stream of liquid dispersion of particulate carbon, water and ash from line 117, as previously described.

Quench water 26 and 121 in quench tanks 27 and 73 respectively and the quenched gas stream leaving the quench tanks are at a temperature in the range of about 149° to 316°C (300° to 600°F) such as about 204° to 260°C (400° to 500°F). Similarly, the temperature of the stream of synthesis gas in line 51 is in the range of about 149° to 316°C (300° to 600°F), such as about 204° to 260°C (400° to 500°F).

In another embodiment, a conventional-type gas cooler and scrubbing tower is provided downstream from gas generator 1. This provides the system with greater flexibility since either gas generator 1 to 2 but not both could be operated to produce two split streams of hot, raw synthesis gas — one hot split gas stream being cooled with water in a quench tank while the other hot, split gas stream is cooled in a gas cooler. Simultaneously, all of the hot, raw synthesis gas produced in the remaining gas generator is quench cooled with water in a quench tank. Further, all of the soot produced in the process and separated in the soot recovery facility is recycled as a portion of the feed to the gas generator from which all of the hot, raw synthesis gas is normally directly quench cooled in water. Accordingly, in this second embodiment with all of the hot raw, synthesis gas produced in gas generator 2 being passed directly into quench tank 73, flow control means 22 or alternatively 39 is open and flow control means 85 or alternatively 108 is closed. Further, the feedstream in lines 3 and 91 are switched to gas generators 2 and 1, respectively. The hot, raw split gas stream in insulated lines 23 and 28 is cooled in conventional convection-type gas cooler 29 by indirect heat exchange with boiler feedwater (BFW) from line 30. Saturated or superheated steam is produced and leaves through outlet line 31 for admixture with at least one of the reactant feedstreams in lines 3, 20, 91, or 96. The temperature of the partially cooled gas stream leaving gas cooler 29 or alternatively in the other embodiment from gas cooler 101 is in the range of about 121° to 399°C (250° to 750°F), such as about 177° to 260°C (350° to 500°F). The partially cooled synthesis gas in line 32 is cleaned in gas scrubbing and separation column 33, passed through line 34 into venturi scrubber 35 and scrubbed free from particulate carbon and ash with water from line 36, passed through line 34 into venturi scrubber 35 and scrubbed free from particulate carbon and ash with water from line 36, and then passed through line 37 into column 33. The temperature of the stream of synthesis gas leaving column 33 or alternatively in the other embodiment from column 104 is in the range of about 93.3° to 204°C (200° to 400°F), such as about 121° to 177°C (250° to 350°F). A product stream of clean synthesis gas having a low $H_2O$/dry gas mole ratio in the range of about 0.05 to 0.5, such as about 0.1 is removed from vessel 33 by way of line 38, valve 39, and lines 40 and 41. A water dispersion produced by scrubbing the entrained particulate carbon and ash from the split stream of synthesis gas is removed from the bottom of vessel 33 by way of line 42, valve 66, and line 67, and mixed in line 70 with the streams of liquid dispersion comprising particulate carbon, water, and ash from lines 54, 64, 63 and 118.

Advantageously, the flexibility of this system is such that either one or two streams of synthesis gas may be continuously produced even though one of the gas generators or associated gas cooler may have to be shut down for one reason or another. For example, with both synthesis gas generators 1 and 2 of the same size, if either gas generator had to be shut down, then during standby of the shutdown gas generator, the gas generator remaining in operation is capable of producing through quench one gas stream in the amount of up to about 75 vol.%, such as 50—75 vol.% of the plant-design total synthesis gas output with no gas stream being cooled in a convection-type gas cooler. Alternatively, during standby of one gas generator, the other gas generator in operation and fitted with a gas cooler is capable of producing one split gas stream through quench in the amount of up to about 50 vol.%, such as 30 to 50 vol.%, of the plant-design total synthesis gas output; and simultaneously cooling in an associated convection-type gas cooler for limited periods of time a second split gas stream in the amount of up to about 25 vol.%, such as about 10 to 25 vol.% of the plant-design total synthesis gas output.

Partial oxidation gas generator 1 for producing the hot, raw synthesis gas containing entrained particulate carbon and ash comprises a vertical unpacked free-flow noncatalytic cylindrical shaped steel pressure vessel lined with refractory, such as shown in coassigned US—A—2809104. A typical quench drum is also shown in said patent. Partial oxidation gas generator 2 with a quench tank and gas cooler for producing split streams of synthesis gas is shown in coassigned US—A—4141696. A burner, such as shown in coassigned US—A—2928460, may be used to introduce the feed streams into the reaction zone of the gas generators. These coassigned U.S. patents are incorporated herein by reference. The atomic ratio of free oxygen to carbon in the fuel (O/C ratio), is in the range of about 0.6 to 1.6, and preferably about 0.8 to 1.4. The exothermic partial oxidation reaction takes place in the presence of a temperature moderator selected from the group steam, water, $CO_2$, $N_2$, cooled and cleaned recycled synthesis gas and mixtures thereof. When steam or water is used as a temperature moderator, the $H_2O$/fuel weight ratio in the reaction zone is in the range of about 0.1 to 5, and preferably about 0.2 to 0.7. The partial oxidation reaction takes place in the reaction zone of the partial oxidation gas generator at an autogenous temperature in the range of about 927° to 1927°C (1,700° to 3,500°F), such as in the range of about 1098° to 1545°C (2,000° to 2,800°F), and a pressure in the range of about 5,065 to 303,9 bar (5 to 300 atmospheres), such as about 15,2 to 202,6 bar (15 to 200 atmospheres).

The composition of the hot, raw effluent gas stream directly leaving the reaction zone of the partial oxidation gas generator is about as follows, in mole percent: $H_2$ 10 to 70, CO 15 to 57, $CO_2$ 0.1 to 25, $H_2O$ 0.1 to 20, $CH_4$ nil to 60, $H_2S$ nil to 2, COS nil to 0.1, $N_2$ nil to 60, and Ar nil to 2.0. Particulate carbon is present in the range of about 0.2 to 20 weight% (basis carbon content in the feed). Ash is present in the range of about 0.05 to 5.0 wt.%, such as 0.1 to 1.0 wt.% (basis total weight of fuel feed) when no soot dispersion from line 5 is mixed with the heavy hydrocarbon fuel feedstock (as in line 91), and in the range of about 0.2 to 20.0 wt.% when the soot dispersion from line 5 is in admixture with the heavy hydrocarbon fuel (as in line 3).

Depending on the composition after removal of the entrained particulate carbon and ash by quench cooling and/or scrubbing with water and with or without dewatering, the gas stream may be employed as synthesis gas, reducing gas, or fuel gas.

The heavy liquid hydrocarbon fuel containing high metal concentrations which is used as the principal fuel feed in partial oxidation gas generators 1 and 2 is generally unsatisfactory for use as a fuel for many purposes because of the corrosive nature of the ash. The corrosiveness of the ash is due primarily to the oxidation products of the naturally-occurring metal compounds. Advantageously, by the subject process these comparatively low cost fuels may now be used as a source of synthesis gas. These heavy liquid hydrocarbon fuels have a density in degrees API of 10 or less, and an initial boiling point of greater than 204°C (400°F). Such as in the range of about 204° to 316°C (400° to 600°F), say 232° to 260°C (450° to 500°F), when measured at atmospheric pressure in accordance with standard test methods of the American Society For Testing and Materials.

Naturally occurring metallic compounds or principally vanadium, nickel and iron, and traces of chromium and molybdenum, if any, including oil-soluble materials, colloidally dispersed metallic compounds and complex organometallic compounds, are present in these heavy liquid hydrocarbon fuels. The metals and compounds are present in combined amounts ranging from about 10 parts per million (ppm) to over 5000 ppm, such as about 50 to 2000 ppm, say over 250 ppm (basis weight of the fuel). The reaction products of said metal constituents leave the reaction zone of the gas generator as metallic, oxide and sulfide ash particles entrained in the effluent gas stream.

A portion of the ash, i.e. about 5 to 75 wt.% (basis weight of ash) is separated from quench cooling and scrubbing water in the conventional soot recovery facility 6, for example by sedimentation. The remainder of the ash is recycled to the gas generator along with the liquid dispersion of soot. The liquid carrier in the soot dispersion is selected from the group water, liquid hydrocarbon fuel, and mixtures thereof. The solids content is in the range of about 0.1 to 8.0 wt.%, such as about 1.0 to 6.0 wt.%, and comprises a combination of particulate carbon and ash. About 5 to 560 wt.% of the soot comprises the metals Ni, V, and Fe and their reaction products; and the remainder is carbon.

Heavy liquid hydrocarbon fuel containing high metal concentrations suitable for use in the subject process may be selected from the group consisting of crude residua from petroleum distillation and cracking process operations, petroleum distillate, reduced crude, whole crude, asphalt, coal tar, coal derived oil, shale oil, tar sand oil, and mixtures thereof. Pumpable slurries of solid carbonaceous fuel, e.g. particulate carbon, petroleum coke, and mixtures thereof in a vaporizable carrier, such as water, liquid hydrocarbon fuel and mixtures thereof are included within the definition of said heavy liquid hydrocarbon fuel.

The free-oxygen containing gas employed in the subject process is selected from the group consisting of air, oxygen-enriched air, i.e., greater than 21 mole% $O_2$ and substantially pure oxygen i.e. greater than 95 mole% $O_2$. The temperature moderator is selected from the group consisting of steam, water, $CO_2$-rich gas, nitrogen, and recycled synthesis gas.

## Example

The following example illustrates a preferred embodiment of this invention pertaining to the continuous operation of a partial oxidation process employing heavy hydrocarbon fuel feedstocks containing high metal concentrations and total soot recycle without plugging and fouling the tubes of a downstream convection-type gas cooler.

While preferred modes of operation are illustrated, the Example should not be construed as limiting the scope of the invention. The process is continuous and the flow rates are specified on an hourly basis for all streams of materials.

73,500 kg (160,408 lbs) of a vacuum resid having a gravity of 2.0 degrees API and an Ultimate Analysis in weight percent as follows: C 83.45, H 10.10, N 0.35, S 5.5, and O 0.6 and containing the following metals in parts per million (ppm) V 594, Ni 98, and Fe 64 in admixture with 2515 kg (5530 lbs) of recycled unreacted carbon in a liquid dispersion comprising 5.0 wt.% of soot with metals in a liquid carrier comprising said vacuum resid are mixed with 29,800 kg (65,981 lbs) of steam from gas cooler 101 at a temperature of 302°C (574°F) and a pressure of 80 bar (1165 psig). The mixture is passed through a passage in burner 17, at a temperature of 293°C (560°F) and a pressure of 77 bar (1120 psig). The burner is located in the upper end of conventional vertical refractory lined free-flow noncatalytic unpacked synthesis gas generator 1.

Simultaneously, a stream of 79,200 kg (174,453 lbs) of substantially pure oxygen i.e., 99.5 mole% $O_2$ at a temperature of 149°C (300°F) and a pressure of 80 bar (1165 psig) is passed through another passage of the burner. The feed streams impinge, mix and the partial oxidation and other related reactions then take place in the reaction zone of gas generator 1. A stream of 249,000 m³ (8.80 million standard cubic feet) (measured at 15.6°C (60°F), 1 bar (14.7 psig)) of hot raw synthesis gas leaves the reaction zone of the gas generator at a temperature of 1481°C (2,596°F) and a pressure of 0,072 bar (1,050 psig). The composition of the raw, synthesis gas in chamber 24 is shown in Column 1 of Table 1. About 1283 kg (2,822 lbs) of unreacted particulate carbon and 639 kg (1,413 lbs) of ash are entrained in the raw synthesis gas. The term 'ash' includes all of the reaction products of the metal compounds in the fuel feed to the gas generator.

With a flow control means for line 23 closed, such as 22 or alternatively 39, all of the hot raw gas stream leaving reaction zone 16 is introduced into quench water in quench tank 27, carrying with it substantially all of the entrained particulate matter, i.e., particulate carbon and ash being produced. The stream of raw synthesis gas is cooled and cleaned by the quench water and by supplemental scrubbing with water in venturi scrubber 48 and scrubbing and separating column 49 to produce the clean product stream of synthesis gas with a high $H_2O$/dry gas mole ratio of 1.57. This product stream of synthesis gas in line 51 comprises 862,000 m³ (30.45 million SCF) and has the composition shown in Column 2 of Table 1.

Simultaneously, 74,500 kg (164,304 lbs) of a feedstream of vacuum resid from line 4 at a temperature of 302°C (574°F) and a pressure of 80 bar (1,165 psig) in admixture with 29,000 kg (63,838 lbs) of steam from gas cooler 101 is passed through one passage of burner 100 located in the upper end of conventional vertical refractory lined free-flow noncatalytic unpacked synthesis gas generator 2. A feedstream comprising 75,800 kg (167,612 lbs) of substantially pure oxygen i.e., 99.5 mole% $O_2$ from line 18 at a temperature of 149°C (300°F) and a pressure of 80 bar (1,165 psig) is passed through another passage of burner 100. The feedstreams impinge, mix, and the partial oxidation and other related reactions then take place in the reaction zone of gas generator 1. A stream 243.000 m³ (8.59 million standard cubic feet) (measured at 15.6°C (60°F), 1 bar (14.7 psig)) of raw synthesis gas leaves the reaction zone of gas generator 2 at a temperature of 1372°C (2,504°F) and a pressure of 0,072 bar (1,050 psig). The composition of the raw synthesis gas in chamber 89 is shown in Column 3 of Table 1. About 1227 kg (2,706 lbs) of unreacted particulate carbon and 75 kg (165 lbs) of ash are entrained in the stream of raw synthesis gas.

With flow control means for line 86 open, such as 85 or alternatively 108, all of the raw effluent gas stream leaving reaction zone 88 is immediately split into two hot raw gas streams in gas-diversion chamber 98. The first split hot raw gas stream comprising 122,500 m³ (4.29 million SCF) of raw synthesis gas is passed through insulated passages 86 and 87, and cooled in gas cooler 101.

The second split stream comprising the remainder of the hot raw effluent gas stream is simultaneously passed through dip-leg 120 and quench cooled in quench tank 73. The actual split between the two trains may be controlled by back pressure valves in each line.

The partially cooled first split gas stream leaving gas cooler 101 is scrubbed with water to produce 122,000 m³ (4.30 million SCF) of clean synthesis gas with a low $H_2O$/dry gas mole ratio of 0.093. This product stream of synthesis gas in line 41 has the composition shown in Column 4 of Table I.

The water dispersion of particulate matter is removed from quench tanks 27 and 73 and from gas scrubbing and separating towers 33, 49 and 104 and processed in conventional soot recovery facility 6. About 316,000 kg (697,503 lbs) of clarified water (line 72), 327 kg (719 lbs) of ash (line 71), and 67,500 kg (140,910 lbs) of a soot-vacuum resid dispersion (line 5) are obtained. The water is recycled to the quench tanks and scrubbers, the ash is removed and sent to a metals recovery plant for separating by-product vanadium and nickel, and the soot-vacuum resid dispersion is mixed with the heavy hydrocarbon fuel and recyled to gas generator 1 as a portion of the fuel, as previously described.

## TABLE I

### Gas Composition

| Column No. | 1 | 2 | 3 | 4 |
|---|---|---|---|---|
| Drawing Reference No. | 24 | 51 | 89 | 41 |
| **Composition Mole %** | | | | |
| CO | 44.87 | 19.29 | 44.25 | 44.34 |
| $H_2$ | 39.51 | 16.99 | 40.23 | 40.31 |
| $CO_2$ | 4.33 | 1.86 | 4.21 | 4.22 |
| $H_2O$ | 9.51 | 61.10 | 9.53 | 9.71 |
| $CH_4$ | 0.36 | 0.15 | 0.36 | 0.36 |
| Ar | 0.12 | 0.05 | 0.12 | 0.12 |
| $N_2$ | 0.09 | 0.04 | 0.09 | 0.09 |
| $H_2S$ | 1.15 | 0.50 | 1.15 | 1.15 |
| COS | 0.06 | 0.03 | 0.06 | 0.06 |
| Metals and Metal Compounds (PPM) | 3470 | — | 420 | — |

By the subject invention, even though there is total carbon recycle in the process the metals content of the raw, split gas stream continuously entering a convection-type gas cooler may be limited to a value which will not exceed that corresponding to the metals content of the fresh hydrocarbon fuel feedstock. Build-up of metal deposits and fouling of boiler tubes may be thereby prevented and the life of the gas cooler extended.

Advantageously, the subject system provides for flexible operation and equipment back-up. In the event one gas-cooler or gas scrubber has to be shut down, for example for maintenance, a large proportion of the plant-design total synthesis gas output can be continuously produced by the other train. Further, two product streams of synthesis gas with high and low $H_2O$/dry gas mole ratios respectively may be simultaneously produced from low cost fuels containing a high metals content and total recycle of all soot produced in the system and with no substantial plugging or fouling of a convection-type gas cooler in the system.

The process of the invention has been described generally and by examples with reference

**0 134 858**

to heavy hydrocarbon fuel and synthesis gas having particular compositions for purposes of clarity and illustration only. It will be apparent to those skilled in the art from the foregoing that various modifications of the process disclosed herein can be made without departure from the spirit of the invention.

**Claims**

1. A partial oxidation process comprising:

(a) reacting a reactant fuel feedstream comprising a heavy hydrocarbon fuel feedstock containing high metal concentrations in admixture with a liquid dispersion comprising soot in a liquid carrier with a free-oxygen containing gas in the presence of a temperature moderator at an autogenous temperature in the range of 927° to 1927°C (1700° to 3500°F) and a pressure in the range of about 5 to 300 atmospheres in the reaction zone of a first free-flow noncatalytic partial oxidation gas generator to produce a hot, raw stream of synthesis gas comprising $H_2$, CO, $CO_2$, particulate carbon, ash, and at least one material from the group $H_2O$, $CH_4$, $H_2S$, COS, $H_2$ and Ar;

(b) quench cooling and scrubbing with water at least a portion of the hot, raw synthesis gas stream from (1), and separating a partially cleaned synthesis gas stream from a stream of liquid dispersion comprising particulate carbon, water, and ash;

(c) simultaneously with (a) reacting a heavy hydrocarbon fuel feedstock containing high metal concentrations with a free-oxygen containing gas in the presence of a temperature moderator at an autogenous temperature in the range of 927° to 1927°C (1700° to 3500°F) and a pressure in the range of about 5 to 300 atmospheres in the reaction zone of a second free-flow noncatalytic partial oxidation gas generator to produce a hot, raw stream of synthesis gas comprising $H_2$, CO, $CO_2$, particulate carbon, ash, and at least one material from the group $H_2O$, $CH_4$, $H_2S$, COS, $H_2$ and Ar;

(d) splitting the hot, raw synthesis gas stream from (3) into first and second hot-split synthesis gas streams;

(e) cooling in a convection-type gas cooler all of the first hot, split gas stream from (d), scrubbing the partially cooled gas stream with water, and separating a clean product stream of synthesis gas with a low $H_2O$/dry gas mole ratio from a stream of liquid dispersion of particulate carbon, water, and ash;

(f) quench cooling and scrubbing with water all of the second hot, split gas stream from (d), and separating a partially cleaned synthesis gas stream from a stream of liquid dispersion comprising particulate carbon, water, and ash;

(g) mixing together the partially cleaned synthesis gas streams from (b) and (f), scrubbing the combined streams with water, and separating a clean product stream of synthesis gas with a high $H_2O$/dry gas mole ratio from a stream of liquid dispersion comprising particulate carbon, water, and ash;

(h) combining the streams of liquid dispersion comprising particulate carbon, water, and ash from (b), (e), (f), and (g); and separating in a soot-recovery zone separate streams of clarified water, ash, and a liquid dispersion comprising soot in a liquid carrier; and

(i) mixing all of the liquid dispersion comprising soot in a liquid carrier from (h) with fresh heavy hydrocarbon fuel feedstock containing high metal concentrations, and introducing said mixture into the first partial oxidation gas generator in (a) as said reactant fuel feedstream.

2. A process according to Claim 1 wherein said first and second synthesis gas generators are substantially of the same size, and about 45 to 55 volume percent of the plant-design total synthesis gas output is produced by said first gas generator and the remainder of the plant-design total synthesis gas output is produced by said second gas generator.

3. A process according to Claim 2 wherein said first split, hot raw synthesis gas stream in (d) comprises about 10 to 40 vol.% of the plant-design total synthesis gas output and said second split, hot, raw synthesis gas stream comprises the remainder of the plant-design total synthesis gas output produced by said second gas generator.

4. A process according to any preceding claim wherein the $H_2O$/dry gas mole ratio of the clean product stream of synthesis gas from (e) is in the range of about 0.05 to 0.5.

5. A process according to any preceding claim wherein the $H_2O$/dry gas mole ratio of the clean product stream of synthesis gas from (g) is in the range of about 1.0 to 2.0.

6. A process according to any preceding claim provided with the steps of passing boiler feed water in indirect heat exchange with the first hot, split gas stream passing through the convection-type gas cooler in (e) to produce steam, and introducing said steam into said first and/or said second gas generator as said temperature moderator.

7. A process according to any preceding claim in which said heavy hydrocarbon fuel feedstock containing high metal concentrations is selected from the group consisting of crude residua from petroleum distillation and cracking process operations, petroleum distillate, reduced crude, whole crude, asphalt, coal tar, coal derived oil, shale oil, tar sand oil, and mixtures thereof.

8. A process according to any of Claims 1 to 6 in which said heavy hydrocarbon fuel feedstock comprises a pumpable slurry of particulate carbon, petroleum coke, and mixtures thereof, in a vaporizable liquid carrier, such as water, liquid hydrocarbon fuel, and mixtures thereof.

9. A process according to any preceding claim in which said temperature moderator is selected from the group consisting of steam, water, $CO_2$-rich gas, nitrogen, and recycled synthesis gas.

10. A process according to any preceding claim in which said free-oxygen containing gas is selected from the group consisting of air, oxygen-enriched air, i.e. greater than 21 mole% $O_2$, and substantially pure oxygen, i.e. greater than about 95 mole% oxygen.

11. A system for simultaneously producing two clean product streams of synthesis gas having high and low $H_2O$/dry gas mole ratios, respectively, comprising:

at least one free-flow partial oxidation gas generator (1) with a refractory lined reaction zone from which all of the hot raw effluent gas is discharged into a quench tank (27) containing water for quench cooling and scrubbing, at least one free-flow partial oxidation gas generator (2) with a refractory lined reaction zone and a gas-diversion (89) means for splitting the hot raw effluent gas stream into two split streams, and a convection-type gas cooler (101) connected to said gas-diversion means for cooling one split stream of the hot raw effluent gas stream, a gas scrubber and gas-liquid separating (104) means for receiving partially cooled synthesis gas streams from said convection-type gas cooler and providing a clean product stream of synthesis gas with a low $H_2O$/dry gas mole ratio; and, flow control means in the lines for controlling the introduction of all of the hot raw synthesis gas produced by one gas generator (1) into its associated quench tank, and the introduction of one of said split, hot raw synthesis gas streams produced by the other gas generator (2) into its associated quench tank, while simultaneously introducing the remaining split hot raw synthesis gas stream into the gas cooler (101); a gas scrubber and gas-liquid separating means (49) for receiving all of the partially cleaned quenched streams of synthesis gas from the quench tanks in each train and providing a clean product stream of synthesis gas with a high $H_2O$/dry gas mole ratio, and a separate stream of liquid dispersion of particulate carbon, water, and ash; a soot-recovery facility (b) for receiving all of the liquid dispersion of particulate carbon, water and ash from the quench tanks and gas scrubber and gas-liquid separation means in both trains and providing separate streams of ash, clarified water, and liquid dispersion of soot; conduit means (3, 5, 18, 99) connected to at least one gas generator (1) whose hot raw synthesis gas stream is totally quenched for introducing a reactant fuel feedstream comprising a mixture of heavy hydrocarbon fuel feedstock containing high concentrations of metal compounds in admixture with the liquid dispersion of soot, a free-oxygen containing gas, and a temperature moderator; and conduit means (90, 91, 96, 92) connected to the remaining gas generating means for simultaneously introducing a reactant fuel feedstream comprising a mixture of heavy hydrocarbon fuel feedstock containing high concentrations of metal compounds, a free-oxygen containing gas, and a temperature moderator.

**Patentansprüche**

1. Partialoxidationsprozeß, umfassend:

(a) Umsetzen eines an der Reaktion teilnehmenden Brennstoff-Einsatzstroms, umfassend einen schweren Kohlenwasserstoff-Brennstoff mit hohen Metallkonzentrationen in Beimischung mit einer rußhaltigen flüssigen Dispersion in einer Trägerflüssigkeit, mit einem freien Sauerstoff enthaltenden Gas in Anwesenheit eines Temperaturmoderators bei einer autogenen Temperatur von 927—1927°C (1700°—3500°F) und einem Druck von ca. 5—300 at im Reaktionsraum eines ersten nichtkatalytischen Freistrom-Partialoxidationsgaserzeugers unter Erzeugung eines heißen Rohsynthesegasstroms, enthaltend $H_2$, CO, $CO_2$, Kohlenstoffteilchen, Asche und wenigstens einen der Stoffe $H_2O$, $CH_4$, $H_2S$, COS, $H_2$ und Ar;

(b) Abschreckkühlen und Reinigen mit Wasser wenigstens eines Teils des heißen Rohsynthesegasstroms aus (a) und Abtrennen eines teilgereinigten Synthesegasstroms aus einem Kohlenstoffteilchen, Wasser und Asche enthaltenden flüssigen Dispersionsstrom;

(c) gleichzeitig mit (a) Umsetzen eines schweren Kohlenwasserstoff-Brennstoffs, der hohe Metallkonzentrationen enthält, mit einem freien Sauerstoff enthaltenden Gas in Anwesenheit eines Temperaturmoderators bei einer autogenen Temperatur von 927—1927°C (1700°—3500°F) und einem Druck von ca. 5—300 at im Reaktionsraum eines zweiten nichtkatalytischen Freistrom-Partialoxidationsgaserzeugers unter Erzeugung eines heißen Rohsynthesegasstroms, der $H_2$, CO, $CO_2$, Kohlenstoffteilchen, Asche und wenigstens einen der Stoffe $H_2O$, $CH_4$, $H_2S$, COS, $H_2$ oder Ar enthält;

(d) Aufteilen des heißen Rohsynthesegasstroms aus (c) in zwei heiße Synthesegasteilströme;

(e) Kühlen des gesamten ersten heißen Teilgasstroms aus (d) in einem Konvektionsgaskühler, Waschen des teilweise gekühlten Gasstroms mit Wasser und Abtrennen eines reinen Synthesegas-Produktstroms mit niedrigem $H_2O$/Trockengas-Molverhältnis aus einem flüssigen Dispersionsstrom aus Kohlenstoffteilchen, Wasser und Asche;

(f) Abschreckkühlen und Waschen mit Wasser des gesamten zweiten heißen Teilgasstroms aus (d) und Abtrennen eines teilgereinigten Synthesegasstroms aus einem Kohlenstoffteilchen, Wasser und Asche umfassenden flüssigen Dispersionsstrom;

(g) Vermischen der teilgereinigten Synthesegasströme aus (b) und (f), Waschen der vereinigten Ströme mit Wasser und Abtrennen eines reinen Synthesegas-Produktstroms mit hohen $H_2O$/Trockengas-Molverhältnis aus einem Kohlenstoffteilchen, Wasser und Asche umfassenden flüssigen Dispersionsstrom;

(h) Vereinigen der Kohlenstoffteilchen, Wasser und Asche umfassenden flüssigen Dispersionsströme aus (b), (e), (f) und (g); und Abtrennen von Einzelströmen gereinigten Wassers, Asche und einer Ruß in einer Trägerflüssigkeit enthaltenden flüssigen Dispersion in einer Rußrückgewinnungszone; und

(i) Vermischen der gesamten Ruß in einer Trägerflüssigkeit enthaltenden flüssigen Dispersion aus (h) mit frischem, hohe Metallkonzentrationen enthaltendem schwerem Kohlenwasserstoff-Brennstoff und Einleiten des Gemischs in den ersten Partialoxidationsgaserzeuger in (a) als Brennstoff-Einsatzstrom.

2. Prozeß nach Anspruch 1, wobei der erste und der zweite Synthesegaserzeuger im wesentlichen gleiche Größe haben und ca. 45—55 Vol.-% der Gesamtsynthesegasmenge, für die die Anlage ausgelegt ist, vom ersten Gaserzeuger erzeugt wird, während der Rest der Gesamtsynthesegasmenge, für die die Anlage ausgelegt ist, vom zweiten Gaserzeuger erzeugt wird.

3. Prozeß nach Anspruch 2, wobei der erste heiße Rohsynthesegas-Teilstrom in (d) ca. 10—40 Vol.-% der Gesamtsynthesegasmenge, für die die Anlage ausgelegt ist, umfaßt, während der zweite heiße Rohsynthesegas-Teilstrom die vom zweiten Gaserzeuger erzeugte restliche Gesamtsynthesegasmenge, für die die Anlage ausgelegt ist, umfaßt.

4. Prozeß nach einem der vorhergehenden Ansprüche, wobei das $H_2O$/Trockengas-Molver-hältnis des reinen Synthesegas-Produktstroms aus (e) im Bereich von ca. 0,05—0,5 liegt.

5. Prozeß nach einem der vorhergehenden Ansprüche, wobei das $H_2O$/Trockengas-Molver-hältnis des reinen Synthesegas-Produktstroms aus (g) im Bereich von ca. 1,0—2,0 liegt.

6. Prozeß nach einem der vorhergehenden Ansprüche mit folgenden Schritten: Leiten von Kesselspeisewasser in indirekten Wärmeaustausch mit dem durch den Konvektionsgaskühler in (e) geführten ersten heißen Teilgasstrom unter Erzeugung von Dampf und Einleiten des Dampfs als Temperaturmoderator in den ersten und/oder den zweiten Gaserzeuger.

7. Prozeß nach einem der vorhergehenden Ansprüche, wobei der hohe Metallkonzentrationen enthaltende schwere Kohlenwasserstoff-Brenn-stoffeinsatz Rohölrückstände von Erdöl-destillations- und -krackprozessen, Erdöldestilla-te, reduziertes Rohöl, Rohöl, Asphalt, Steinkohlenteer, Kohleöl, Schieferöl, Teersandöl oder deren Gemische ist.

8. Prozeß nach einem der Ansprüche 1—6, wobei der schwere Kohlenwasserstoff-Brennstoffeinsatz eine pumpfähige Aufschlämmung aus Kohlenstoffteilchen, Petrolkoks und deren Gemischen in einem verdampfbaren flüssigen Trägermedium wie Wasser, flüssigem Kohlenwasserstoff-Brennstoff und Gemischen derselben ist.

9. Prozeß nach einem der vorhergehenden Ansprüche, wobei der Temperaturmoderator Wasserdampf, Wasser, $CO_2$-reiches Gas, Stick-stoff oder im Kreislauf rückgeführtes Synthesegas ist.

10. Prozeß nach einem der vorhergehenden Ansprüche, wobei das freien Sauerstoff enthaltende Gas Luft, sauerstoffreiche Luft mit mehr als 21 Mol-% $O_2$ oder im wesentlichen reiner Sauerstoff mit mehr als ca. 95 Mol-% Sauerstoff ist.

11. Anlage zur gleichzeitigen Erzeugung von zwei reinen Synthesegas-Produktströmen mit ho-hem bzw. niedrigem $H_2O$/Trockengas-Molver-hältnis, umfassend: wenigstens einen Freistrom-Partialoxidationsgaserzeuger (1) mit einem feuerfest ausgekleideten Reaktionsraum, aus dem das gesamte ausströmende heiße Rohgas in einen Wasser zum Abschreckkühlen und Waschen enthaltenden Abschrecktank (27) austritt, wenig-stens einen Freistrom-Partialoxidations-gaserzeuger (2) mit einer feuerfest ausgekleideten Reaktionszone und einer Gasumlenkvorrichtung (89), die den austretenden heißen Rohgasstrom in zwei Teilströme teilt, und einen Konvektionsgaskühler (101), der an die Gasumlenkvorrichtung angeschlossen ist und einen Teilstrom des ausströmenden heißen Rohgasstroms kühlt, eine Gasreinigungs- und Gas-Flüssig-Trennvorrichtung (104), die vom Konvektionsgaskühler teilgekühlte Synthesegasströme erhält und einen reinen Synthesegas-Produktstrom mit niedrigem $H_2O$/Trockengas-Molverhältnis liefert; und Strömungsregler in den Leitungen zur Regelung der Einleitung des gesamten im einen Gaserzeuger (1) erzeugten heißen Rohsynthesegasstroms in den zugehörigen Abschrecktank sowie der Einleitung eines der vom anderen Gaserzeuger (2) erzeugten heißen Rohsynthesegas-Teilströme in den zugehörigen Abschrecktank unter gleichzeitiger Einleitung des übrigen heißen Rohsynthesegas-Teilstroms in den Gaskühler (101); eine Gasreinigungs- und Gas-Flüssig-Trennvorrichtung (49), die sämtliche teilgereinigten abgeschreckten Synthesegasströme aus den Abschrecktanks in jedem Zug erhält und einen reinen Synthesegas-Produktstrom mit hohem $H_2O$/Trockengas-Mol-verhältnis sowie einen getrennten Flüssigdispersionstrom aus Kohlenstoffteilchen, Wasser und Asche erzeugt; eine Rußrückgewinnungseinheit (6), die die gesamte Flüssigdispersion aus Kohlenstoffteilchen, Wasser und Asche aus den Abschrecktanks sowie der Gasreinigungs- und Gas-Flüssig-Trennvorrichtung in beiden Zügen erhält und jeweils einen gesonderten Aschestrom, einen Reinwasserstrom und einen flüssigen Rußdispersionsstrom erzeugt; Leitungen (3, 5, 18, 99), die mit wenigstens einem Gaserzeuter (1) verbunden sind, dessen heißer Rohsynthesegasstrom vollständig abgeschreckt ist, zur Einleitung eines an der Reaktion teil-nehmenden Brennstoff-Einsatzstroms, umfas-send ein Gemisch aus hohe Metallverbindungskonzentrationen enthaltendem schwerem Kohlenwasserstoff-Brennstoff in Beimischung mit der flüssigen Rußdispersion, einem freien Sauerstoff enthaltenden Gas und einem Temperatur-moderator; und Leitungen (90, 91, 96, 92), die an den verbleibenden Gaserzeuger angeschlossen sind zur gleichzeitigen Einleitung eines an der Reaktion teilnehmenden Brennstoff-Einsatzstroms, umfassend ein Gemisch aus schwerem Kohlenwasserstoff-Brennstoff mit hohen Konzentrationen an Metallverbindungen, ein freien Sauerstoff enthaltendes Gas und einen Temperaturmoderator.

## Revendications

1. Procédé d'oxydation partielle, consistant:

a) à faire réagir un courant d'alimentation en combustible réactif comprenant une charge d'alimentation de combustible hydrocarboné lourd contenant des concentrations élevées en métaux en mélange avec une dispersion liquide comprenant de la suie dans un support liquide avec un gaz contenant de l'oxygène libre en présence d'un modérateur de température à une température spontanée dans l'intervalle de 927 à 1927°C (1700 à 3500°F) et sous une pression dans l'intervalle d'enrivon 5 à 300 atmosphères dans la zone de réaction d'un premier générateur de gaz à oxydation partielle non catalytique à écoulement libre, pour produire un courant de gaz de synthèse brut, chaud, comprenant $H_2$, CO, $CO_2$, du carbone particulaire, de la cendre et au moins une matière du groupe $H_2O$, $CH_4$, $H_2S$, COS, $H_2$ et Ar;

b) à refroidir par trempe et à laver avec de l'eau au moins une partie du courant de gaz de synthèse brut, chaud, provenant de (1), et à séparer un courant de gaz de synthèse partiellement épuré d'un courant de dispersion liquide comprenant du carbone particulaire, de l'eau et de la cendre;

c) en même temps que (a) à faire réagir une charge d'alimentation en combustible hydrocarboné lourd contenant des concentrations élevées en métaux avec un gaz contenant de l'oxygène libre en présence d'un modérateur de température, à une température spontanée dans l'intervalle de 927 à 1927°C (1700°F a 3500°F) et sous une pression dans l'intervalle d'environ 5 à 300 atmosphères dans la zone de réaction d'un second générateur de gaz à oxydation partielle non catalytique à écoulement libre pour produire un courant brut, chaud, de gaz de synthèse comprenant $H_2$, CO, $CO_2$, du carbone particulaire, de la cendre et au moins une matière du groupe $H_2O$, $CH_4$, $H_2S$, COS, $H_2$ et Ar;

d) à séparer le courant de gaz de synthèse brut, chaud de (3) en un premier et un second courants de gaz de synthèse séparés à chaud;

e) à refroidir dans un réfrigérant pour gaz du type à convection la totalité du premier courant de gaz séparé, chaud provenant de (d), à laver le courant de gaz partiellement refroidi avec de l'eau et à séparer un courant de gaz de synthèse épuré ayant un rapport molaire $H_2O$/gaz sec faible d'un courant de dispersion liquide de carbone particulaire, d'eau et de cendre;

f) à refroidir par trempe et à laver avec de l'eau la totalité du second courant de gaz séparé, chaud, provenant de (d) et à séparer un courant de gaz de synthèse partiellement épuré d'un courant de dispersion liquide comprenant du carbone particulaire, de l'eau et de la cendre;

g) à mélanger ensemble les courants de gaz de synthèse partiellement épurés provenant de (b) et de (f), à laver les courants combinés avec de l'eau, et à séparer un courant épuré de gaz de synthèse ayant un rapport molaire $H_2O$/gaz sec élevé d'un courant de dispersion liquide comprenant du carbone particulaire, de l'eau et de la cendre;

h) à combiner les courants de dispersion liquide comprenant du carbone particulaire, de l'eau et de la cendre de (b), (e), (f), et (g); et à séparer dans une zone de récupération de la suie des courants séparés d'eau clarifiée, de cendre et d'une dispersion liquide comprenant de la suie dans un support liquide; et

i) à mélanger la totalité de la dispersion liquide comprenant de la suie dans un support liquide provenant de (h) avec une charge d'alimentation fraîche en combustible hydrocarboné lourd contenant des concentrations élevées en métal, et à introduire ce mélange dans le premier générateur de gaz à oxydation partielle dans (a) en tant que ce courant d'alimentation en combustible réactif.

2. Procédé suivant la revendication 1, dans lequel ce premier et ce second générateurs de gaz de synthèse ont pratiquement la même taille, et environ 45 à 55 volumes pour cent de la production totale de gaz de synthèse prévue pour l'installation est produite par ce premier générateur de gaz et le reste de la production totale de gaz de synthèse prévue pour l'installation est produite par ce second générateur de gaz.

3. Procédé suivant la revendication 2, dans lequel ce premier courant de gaz de synthèse brut chaud séparé dans (d) comprend environ 10 à 40 vol.% de la production totale de gaz de synthèse prévue pour l'installation et ce second courant de gaz de synthèse brut chaud séparé comprend le reste de la production totale de gaz de synthèse prévue pour l'installation produite par ce générateur de gaz.

4. Procédé suivant l'une quelconque des revendications précédentes, dans lequel le rapport molaire $H_2O$/gaz sec du courant de gaz de synthèse épure provenant de (e) est dans l'intervalle d'environ 0,05 à 0,5.

5. Procédé suivant l'une quelconque des revendications précédentes, dans lequel le rapport molaire $H_2O$/gaz sec du courant de gaz de synthèse épuré provenant de (g) est dans l'intervalle d'environ 1,0 à 2,0.

6. Procédé suivant l'une quelconque des revendications précédentes, comprenant les stades consistant à faire passer de l'eau d'alimentation de la chaudière en échange de chaleur indirect avec le premier courant de gas séparé, chaud traversant le réfrigérant pour gaz du type à convection dans (e) pour produire de la vapeur, et à introduire cette vapeur dans ce premier et/ou ce second générateur de gaz en tant que ce modérateur de température.

7. Procédé suivant l'une quelconque des revendications précédentes, dans lequel cette charge d'alimentation en combustible hydrocarboné lourd contenant des concentrations élevées en métal est choisie dans le groupe constitué des résidus bruts de la distillation du pétrole et des installations de craquage, d'un distillat du pétrole, d'un brut réduit, d'un brut entier, de l'asphalte, du goudron, d'une huile dérivée du goudron, de l'huile de schistes, de l'huile de sables asphaltiques, et de mélanges de ceux-ci.

8. Procédé suivant l'une quelconque des revendications 1 à 6, dans lequel cette charge d'alimentation en combustible hydrocarboné comprend une bouillie pompable de carbone particulaire, de coke de pétrole et de mélanges de ceux-ci, dans un support liquide vaporisable, tel que l'eau, un combustible hydrocarboné liquide, et des mélanges de ceux-ci.

9. Procédé suivant l'une quelconque des revendications précédentes, dans lequel ce modérateur de température est choisi dans le groupe constitué de la vapeur, de l'eau, de $CO_2$, du gaz riche, de l'azote et du gaz de synthèse recyclé.

10. Procédé suivant l'une quelconque des revendications précédentes, dans lequel ce gaz contenant de l'oxygène libre est choisi dans le groupe constitué de l'air, de l'air enrichi en oxygène, c'est-à-dire contenant plus de 21 mol% de $O_2$, et de l'oxygène pratiquement pur, c'est-à-dire contenant plus d'environ 95 mol% d'oxygène.

11. Système pour produire simultanément deux courants de gaz de synthèse épuré ayant des rapports molaires $H_2O$/gaz sec élevés et faibles, respectivement, comprenant:

— au moins un générateur de gaz à oxydation partielle à écoulement libre (1) avec une zone de réaction revêtue de réfractaire, duquel tout le gaz effluent brut chaud est évacué dans un réservoir de trempe (27) contenant de l'eau pour le refroidissement par trempe de lavage, au moins un générateur de gaz à oxydation partielle à écoulement libre (2) avec une zone de réaction revêtue de réfractaire et un moyen de dérivation des gaz (89) pour séparer le courant de gaz effluent brut chaud en deux courants séparés, et un réfrigérant pour gaz du type à convection (101) relié à ce moyen de dérivation des gaz pour refroidir un courant séparé du courant de gaz effluent brut chaud, un laveur à gaz et un moyen de séparation gaz-liquides (104) pour recevoir des courants de gaz de synthèse partiellement refroidis provenant de ce réfrigérant pour gaz du type à convection et fournir un courant de gaz de synthèse épuré ayant un rapport molaire $H_2O$/gaz sec faible; et des moyens de réglage du débit dans les canalisations pour réduire l'introduction de la totalité du gaz de synthèse brut chaud produit par un générateur de gaz (1) dans son réservoir de trempe associé, et l'introduction d'un de ces courants de gaz de synthèse brut chaud séparés par l'autre générateur de gaz (2) dans son réservoir de trempe associé, tout en introduisant simultanément le reste du courant de gaz de synthèse brut chaud séparé dans le réfrigérant pour gaz (101); un laveur à gaz et un moyen de séparation gaz-liquides (49) pour recevoir la totalité des courants de gaz de synthèse pompés partiellement épurés provenant des réservoirs de trempe de chaque train, et fournir un courant de gaz de synthèse épuré ayant un rapport molaire $H_2O$/gaz sec élevé, et un courant séparé de dispersion liquide de carbone particulaire, d'eau et de cendre; une installation de récupération de la suie (6) pour recevoir la totalité de la dispersion liquide du carbone particulaire, d'eau et de cendre provenant des réservoirs de trempe et du laveur à gaz et du moyen de séparation gaz-liquide dans les deux trains et fournissant des courants séparés de cendre, d'eau clarifiée et de dispersion liquide de suie; des conduites (3, 5, 18, 99) reliées à au moins un générateur de gaz (1) dont le courant de gaz de synthèse brut chaud est totalement trempé pour introduire un courant d'alimentation en combustibles réactifs comprenant un mélange de charge d'alimentation de combustibles hydrocarbonés lourds contenant des concentrations élevées en composés métalliques en mélange avec la dispersion liquide de suie, un gaz contenant de l'oxygène libre, et un modérateur de température; et des conduites (90, 91, 96, 92) reliées à l'autre moyen de production de gaz pour introduire simultanément un courant d'alimentation en combustible réactif comprenant un mélange de charge d'alimentation de combustible hydrocarboné lourd contenant des concentrations élevées en composés métalliques, un gaz contenant de l'oxygène libre et un modérateur de températures.